# EUROPEAN PATENT APPLICATION

(11) **EP 4 451 376 A1**
(43) Date of publication of application: **23.10.2024**
(21) Application number: 22928132.4
(22) Date of filing: 20.07.2022
(51) Int. Cl.: H01M 4/36

(54) **NEGATIVE ELECTRODE MATERIAL AND PREPARATION METHOD THEREFOR, NEGATIVE ELECTRODE PLATE AND BATTERY**

(30) Priority: 25.02.2022 CN 202210179436
(71) Applicant: SVOLT Energy Technology Co., Ltd., Changzhou, Jiangsu 213200 (CN)
(72) Inventor: ZHAO, Xiaofeng, Hangzhou, Jiangsu 213200 (CN)
(74) Representative: Groth & Co. KB
(86) International application number: PCT/CN2022/106671
(87) International publication number: WO 2023/159863

(57) **Abstract**

Disclosed in the present application are a negative electrode material and a preparation method therefor, a negative electrode plate and a battery. The negative electrode material has a core-shell structure, wherein the inner core is boron-doped graphite, and the shell comprises porous titanium oxide, amorphous carbon and a conductive agent. By coating the boron-doped graphite with the shell comprising the porous titanium oxide, the amorphous carbon and the conductive agent, all the components cooperate with each other, such that not only is the ion/electron transport rate of the negative electrode material significantly improved, and the conductivity improved, but intercalation of lithium ions of a lithium battery, which is formed by the negative electrode material, can also be improved, the loss of irreversible capacity of the battery is reduced, and the first efficiency and rate capability of the battery are improved. Especially, due to the use of the porous titanium oxide, the structure of the negative electrode material is also more stable, thereby significantly improving the cycle performance of the battery.

## Description

### CROSS REFERENCE TO RELATED APPLICATIONS

The present application claims priority to Chinese Patent Application No. 202210179436.6, entitled "NEGATIVE ELECTRODE MATERIAL AND PREPARATION METHOD THEREFOR, NEGATIVE ELECTRODE PLATE, AND BATTERY", and filed to the Chinese National Intellectual Property Administration on February 25, 2022, the entire contents of which are incorporated into the present application by reference.

### TECHNICAL FIELD

The present application relates to the technical field of battery negative electrode materials, specifically to a negative electrode material and its preparation method, a negative electrode plate, and a battery.

### BACKGROUND

At present, the market-oriented negative electrode materials are mainly made of artificial graphite, with a theoretical specific capacity of 372mAh/g. With the increasing demand for energy density in lithium-ion batteries, the development of negative electrode materials with high specific capacity has always been a research hotspot in the field of lithium-ion batteries. Although silicon-based materials have a high specific capacity (theoretical capacity of 3200mAh/g), they also have fatal drawbacks such as high volume expansion rate and poor structural stability, resulting in poor rate performance of batteries, making it difficult to meet the demand for negative electrode materials in fast charging systems, and the cost is high.

The doping and coating of negative electrode materials have a certain improvement effect on their electrochemical performance. The doping and coating of negative electrode materials mainly involves coating amorphous carbon and conductive agents on the surface of graphite to improve the rate performance, increase the graphitization temperature, and increase the specific capacity of negative electrode materials. However, there are also defects such as the first efficiency and capacity per gram decrease, which affect the utilization of the capacity per gram of the full battery positive electrode material, which in turn affects the overall energy density of the battery.

### SUMMARY

Therefore, the technical problem to be solved in the present application is to overcome the defect that the energy density and rate of lithium batteries obtained from the negative electrode materials used in the existing technology cannot be balanced, that is, to improve the rate performance of the battery while also improving the energy density, thereby providing a negative electrode material and its preparation method.

The present application provides a negative electrode material, comprising:
a core comprising a boron-doped graphite; and
a shell which is coated outside the core, the shell comprising a porous titanium oxide, an amorphous carbon, and a conductive agent.

Furthermore, the porosity of the porous titanium oxide is in a range from 5% to 50%, and the average pore size of the porous titanium oxide is in a range from 10nm to 500nm. The porosity and average pore size in the present application were measured using the nitrogen adsorption method, specifically using the nitrogen adsorption porosity tester JW-BK300C.

Furthermore, a mass ratio of the core to the shell is (90-99):(1-10).

Furthermore, a mass ratio of the porous titanium oxide to the amorphous carbon is (1:10):(88-98.5). Optionally, the mass ratio of the porous titanium oxide to the amorphous carbon is (5-10):(88-95).

Furthermore, a mass ratio of the porous titanium oxide to the conductive agent is (1-10):(0.5-2). Optionally, the mass ratio of the porous titanium oxide to the conductive agent is (5-10):(1-2).

Furthermore, a doping ratio of boron in the boron-doped graphite is in a range from 1wt% to 20wt%;
wherein, the doping ratio of boron refers to the percentage of the mass of boron atoms in the total mass of boron-doped graphite.

Furthermore, the conductive agent is selected from at least one of carbon nanotubes, graphene and super carbon black. Super carbon black, also known as super conductive carbon black (SP), is a conductive carbon black like furnace black. It is formed by aggregating native particles with a diameter of about 40nm into native aggregates of 150-200nm, which are then processed and formed through soft aggregation and artificial compression. Wherein, carbon nanotubes, graphene, and super carbon black can all be selected from conventional carbon nanotubes, graphene, and super carbon black in this field.

The present application also provides a method for preparing a negative electrode material, comprising the following steps:
(1) mixing a porous titanium oxide, an amorphous carbon raw material, a conductive agent and an organic solvent to prepare a coating solution; mixing and heating a graphite raw material, a boron-containing compound and a binder, to obtain a precursor material; and
(2) mixing the precursor material with the coating solution, drying, carbonizing to prepare the negative electrode material.

Furthermore, the method for preparing a negative electrode material also satisfies at least one of the following 1) to 8):
1) the amorphous carbon raw material is a resin, and optionally, the resin is selected from at least one of phenolic resin, furfural resin and epoxy resin; wherein the carbon content of phenolic resin, furfural resin, and epoxy resin is 25%, which means that the mass of amorphous carbon obtained from the resin after drying and carbonization treatment accounts for 25% of the mass of its raw resin;
2) the organic solvent is selected from at least one of carbon tetrachloride, N-methylpyrrolidone, cyclohexane, tetrahydrofuran and xylene; and/or, the conductive agent is selected from at least one of carbon nanotube, graphene and super carbon black; and/or, the boron-containing compound is selected from at least one of boron oxide, titanium diboride, magnesium diboride, chromium diboride and boron carbide;
3) the graphite raw material is a needle coke, and optionally, the needle coke is selected from at least one of petroleum-based needle coke and coal-based needle coke;
4) the binder is asphalt;
5) grinding, stirring and/or ultrasonic treatment are conducted after the mixing of step (1) and/or the mixing of step (2);
6) in step (1), the heating process involves heating to a temperature ranging from 200 °C to 300 °C under inert gas and holding for 1 hour to 6 hours within this temperature range, then heating to a temperature ranging from 700°C to 1000 °C under inert gas and holding for 1 hour to 6 hours within this temperature range;
7) in step (2), the carbonizing is carried out at a temperature ranging from 600 °C to 1000 °C for a time period ranging from 1 hour to 6 hours; and
8) a mass ratio of the porous titanium oxide to the resin is (10-50):(50-400); and/or, a mass ratio of the porous titanium oxide to the conductive agent is (1-10):(0.5-2); and/or, a mass ratio of the graphite raw material to the boron-containing compound is 100:(1-10).

In the present application, both petroleum-based needle coke and coal-based needle coke can both use conventional petroleum-based needle coke and coal-based needle coke in the field, such as, petroleum-based needle coke that meets the standard "GB/T 37308-2019 Oil-based Needle Coke" and coal-based needle coke that meets the standard "GB T 32158-2015 Coal-based Needle Coke". Phenolic resin, furfural resin, and epoxy resin can all be selected from various specifications of phenolic resin, epoxy resin, and furfural resin in this field. Asphalt can be selected from various specifications of petroleum asphalt and coal asphalt in this field.

Furthermore, in step (1), the porous titanium oxide is added into a resin-containing organic solvent, mixed with a conductive agent-containing organic solvent, to obtain a coating solution.

The mass-volume percentage can be expressed as %(w/v).

In some optional embodiments, a mass-volume percentage of the resin in the resin-containing organic solvent is in a range from 1% to 15%; it means that the mass of resin contained in every 100ml of the resin-containing organic solvent is 1-15g.

In some optional embodiments, a ratio of a mass of the porous titanium oxide to a volume of the resin-containing organic solvent is (1-10)g: (2000-7600)mL.

In some optional embodiments, a mass-volume percentage of the conductive agent in the conductive agent-containing organic solvent is in a range from 0.5% to 2%; it means that every 100ml of the conductive agent-containing organic solvent contains 0.5-2g of the conductive agent.

In some optional embodiments, a ratio of a mass of the porous titanium oxide to a volume of the conductive agent-containing organic solvent is (1-10)g: (100-500)mL.

Furthermore, a process for preparing the porous titanium oxide comprises the following steps:
heating an aqueous solution of titanate salt, adding an acid solution to adjust the pH value, carrying out a reaction, performing solid-liquid separation to keep solid, drying and carbonizing to prepare the porous titanium oxide.

Furthermore, the titanate salt is selected from at least one of calcium titanate, magnesium titanate, lithium titanate, aluminum titanate and potassium titanate; and/or, the aqueous solution of titanate salt is heated at a temperature ranging from 60 °C to 100 °C for at least 1 hour (such as 1 hour to 6 hours); and/or, the reaction is carried out for at least 1 hour (such as 1 hour to 12 hours); and/or, the carbonizing is performed at a temperature ranging from 600 °C to 1000 °C for 1 hour to 6 hours; and/or, the pH value is adjusted to 4 to 6; and/or, the acid solution is a hydrochloric acid solution, a sulfuric acid solution, a citric acid solution, an acetic acid solution, or a phosphoric acid solution. The mass percentage of titanate salt in the aqueous solution of titanate salt is in a range from 1wt% to 10wt%.

The present application also provides a negative electrode plate, comprising any one of the aforementioned negative electrode material or the negative electrode material prepared by any one of the aforementioned method for preparing a negative electrode material. The negative electrode plate can be prepared using conventional methods, such as homogenization, coating, etc.

The present application also provides a battery, comprising the negative electrode plate as described above, as well as a battery shell, a positive electrode plate, a separator, and an electrolyte solution, wherein the battery can be a lithium-ion battery, a sodium-ion battery, a potassium-ion battery, an aluminum-ion battery, etc.

The technical solution of the present application has the following advantages:
(1) the negative electrode material provided in the present application uses the boron-doped graphite which is coated with a shell containing a porous titanium oxide, an amorphous carbon, and a conductive agent. The various components cooperate with each other, which not only significantly improves the ion/electron transfer rate and conductivity of the negative electrode material, but also enhances the intercalation/deintercalation of lithium ions in the lithium battery formed by the negative electrode material, reduces the irreversible capacity loss of the battery, and improves the first efficiency and rate performance of the battery. Especially the use of the porous titanium oxide makes the negative electrode material structure more stable, significantly improving the cycling performance of the battery.
(2) the negative electrode material provided in the present application can further improve the first efficiency and rate performance of the battery composed of the negative electrode material by controlling the porosity of the porous titanium oxide to 5-50% and average pore size to 10-500nm.

### BRIEF DESCRIPTION OF THE DRAWINGS

In order to provide a clearer explanation of the specific embodiments of the present application or technical solution in the prior art, a brief introduction will be given to the drawings required for the specific implementation or description of the prior art. It is evident that the drawings in the following description are some of the implementation modes of the present application. For ordinary technical personnel in the art, other drawings can be obtained based on these drawings without creative labor.
Fig. 1 is an SEM electron microscope image of the negative electrode material prepared in Example 1 of the present application;
Fig. 2 shows a comparison of the cyclic curve of Example 1 and Comparative Example 1.

### DETAILED DESCRIPTION

The following examples are provided for a better understanding of the present application, and are not limited to the best implementation mode. They do not constitute limitations on the content and scope of protection of the present application. Any product that is the same or similar to the present application obtained from the inspiration of the present application or by combining the features of the present application with other existing technologies falls within the scope of protection of the present application.

If the specific experimental steps or conditions are not specified in the examples, they can be carried out according to the conventional experimental steps or conditions described in the literature in this field. The reagents or instruments used without specifying the manufacturer are all conventional reagents and products that can be obtained through commercial procurement. For phenolic resin, all phenolic resins with a solid content of 10-90%, free phenol (%) of ≤ 20, and viscosity of 10-1000mPa•s (25 °C) are suitable for the present application. For example, in the following examples and comparative examples, the phenolic resin uses phenolic resin from Wuxi Guangming Chemical Co., Ltd., model 2130; Oil-based needle coke was purchased from PetroChina Daqing Petrochemical Company or Jinzhou Petrochemical Co., Ltd., both of which meet the standard "GB/T 37308-2019 Oil-based Needle Coke". The coal-based needle coke material was purchased from Tangshan Dongri New Energy Co., Ltd. and meets the standard "GB T 32158-2015 Coal-based Needle Coke". The carbon nanotubes in the following examples and comparative examples were from Jiangsu Cnano Technology Co., Ltd., model LB107-44. Graphene was from Jiangsu Cnano Technology Co., Ltd., model: LB2G3-85. Asphalt was purchased from Jining super lian new materials Technology Co., Ltd., model: GB/8175. Furfural resin was purchased from Wuhan Yuancheng Technology Development Co., Ltd., model: FL resin. Epoxy resin was purchased from Wuxi Aerzi Chemical Co., Ltd., model: 128 epoxy resin.

Taking Example 1 as an example, the calculation formulae for the following parameters are as follows: doping ratio = mass of boron atom /(mass of needle coke material + mass of boron atom) × 100%; mass of the score = mass of the precursor materials; and mass of the shell = (total mass of the porous titanium oxide + total mass of resin × Carbon content + total mass of carbon nanotubes)/(volume of carbon tetrachloride solution containing phenolic resin + volume of NMP dispersion containing nanotubes) × actual volume of the coating liquid used for the negative electrode material.

### EXAMPLE 1

This example provides a negative electrode material and a preparation method thereof, wherein the negative electrode material comprises a core and a shell which is coated outside the core, and wherein the core is a boron-doped graphite; the doping ratio of boron in the boron-doped graphite is 9.6% (a mass fraction); and the shell includes a porous titanium oxide, an amorphous carbon, and carbon nanotubes. The porosity of the porous titanium oxide is 20%, with an average pore size of 100nm. The mass ratio of the core to the shell is 95:5; the mass ratio of the porous titanium oxide to the amorphous carbon is 5:94, and the mass ratio of the porous titanium oxide to carbon nanotubes is 5: 1.

The method for preparing the negative electrode material includes:
(1) Preparation of the porous titanium oxide: 50g of calcium titanate was added into 1,000g of deionized water to prepare a 5% mass concentration of calcium titanate aqueous solution, which were reacted at 80 °C for 6 hours to obtain a first solution; 5vt% hydrochloric acid solution was added dropwise into the first solution, the pH was adjusted to 4, and let it react for 3 hours to obtain a second solution. The second solution was filtered to obtain a solid and the solid was vacuum dried, and then the obtained solid was carbonized in a muffle furnace at 800 °C for 3 hours to obtain the porous titanium oxide;
(2) Preparation of the coating solution: 5g of the porous titanium oxide was added into 7,520ml of carbon tetrachloride containing 5% (w/v) phenolic resin, then 100ml of N-methylpyrrolidone (NMP) dispersion containing 1% (w/v) carbon nanotubes was added, and they were mixed evenly to obtain the coating solution;
(3) Preparation of the negative electrode material: 92g of petroleum-based needle coke material (PetroChina Daqing Petrochemical Company), 31g of titanium diboride, and 5g of asphalt were weighed and mix evenly. The mixture was ground through a ball mill at a rotation rate of 50rpm/min for 48 hours, then heated to 250 °C under an argon inert atmosphere for softening and kept at the temperature for 3h. Then, the temperature was increased to 800 °C under an argon inert atmosphere and kept at the temperature for 3 hours. After that, the temperature was naturally cooled down to room temperature followed by crushing the resultant to obtain a precursor material. Afterwards, 95g of the precursor material was added into 381ml of the coating solution, milled, vacuum dried, and carbonized for 3 hours under an argon inert atmosphere at a temperature of 800 °C to obtain the negative electrode material.

### EXAMPLE 2

This example provides a negative electrode material and a preparation method thereof, wherein the negative electrode material comprises a core and a shell which is coated outside the core, and wherein the core is a boron-doped graphite; the doping ratio of boron in the boron-doped graphite is 2% (a mass fraction); and the shell includes a porous titanium oxide, an amorphous carbon, and graphene. The porosity of the porous titanium oxide is 5%, with an average pore size of 10nm. The mass ratio of the core to the shell is 99:1; the mass ratio of the porous titanium oxide to the amorphous carbon is 10:89, and the mass ratio of the porous titanium oxide to the graphene is 10:1.

The method for preparing the negative electrode material includes:
(1) Preparation of the porous titanium oxide: 20g of lithium titanate was added into 2,000g of deionized water to prepare a 1% mass concentration of lithium titanate aqueous solution, which were reacted at 60 °C for 12 hours to obtain a first solution; 10vt% hydrochloric acid solution was added dropwise into the first solution, the pH was adjusted to 4, and let it react for 1 hour to obtain a second solution. The second solution was filtered to obtain a solid and the solid was vacuum dried, and then the obtained solid was carbonized in a muffle furnace at 600 °C for 6 hours to obtain the porous titanium oxide material;
(2) Preparation of the coating solution: 10g of the porous titanium oxide material was added into 3,560ml of carbon tetrachloride solution containing 10% (w/v) furfural resin, then 100ml of NMP solution containing 1% (w/v) graphene was added, and they were mixed evenly to obtain the coating solution;
(3) Preparation of the negative electrode material: 92.75g of oil-based needle coke material (Jinzhou Petrochemical Co., Ltd.), 6.25g of boron oxide and 1g of asphalt were weighed and mix evenly. The mixture was ground through a ball mill at a rotation rate of 10rpm/min for 72 hours, then heated to 200 °C under an argon inert atmosphere for softening and kept at the temperature for 6 hours. Then, the temperature was increased to 700 °C under an argon inert atmosphere and kept at the temperature for 6 hours. After that, the temperature was naturally cooled down to room temperature followed by crushing the resultant to obtain a precursor material. Afterwards, 99g of the precursor material was added into 36.8ml of the coating solution, milled, vacuum dried, and carbonized for 6 hours under an argon inert atmosphere at a temperature of 600 °C to obtain the negative electrode material.

### EXAMPLE 3

This example provides a negative electrode material and a preparation method thereof, wherein the negative electrode material comprises a core and a shell which is coated outside the core, and wherein the core is boron-doped graphite; the doping ratio of boron in the boron-doped graphite is 20% (a mass fraction); and the shell includes a porous titanium oxide, an amorphous carbon, and carbon nanotubes. The porosity of the porous titanium oxide is 50%, with an average pore size of 500nm. The mass ratio of the core to the shell is 90: 10; the mass ratio of the porous titanium oxide to the amorphous carbon is 10:88, and the mass ratio of the porous titanium oxide to carbon nanotubes is 10:2.

The method for preparing the negative electrode material includes:
(1) Preparation of the porous titanium oxide: 20g of aluminum titanate was added into 200g of deionized water to prepare a 10% mass concentration of aluminum titanate aqueous solution, which were reacted at 100 °C for 1 hour to obtain a first solution; 5vt% hydrochloric acid solution was added dropwise into the first solution, the pH was adjusted to 4, and let it react for 6 hours to obtain a second solution. The second solution was filtered to obtain a solid and the solid was vacuum dried, and then the obtained solid was carbonized in a muffle furnace at 1,000 °C for 1 hour to obtain the porous titanium oxide material;
(2) Preparation of the coating solution: 10g of the porous titanium oxide material was added into 2,356ml of cyclohexane solution containing 15% (w/v) epoxy resin, and then 200ml of NMP dispersion containing 1% (w/v) graphene was added therein, and they were mixed evenly to obtain the coating solution;
(3) Preparation of negative electrode material: 80g of coal-based needle coke material, 41.6g of magnesium diboride and 10g of asphalt were weighed and mix evenly. The mixture was ground through a ball mill at a rotation rate of 100rpm/min for 12 hours, then heated to 300 °C under an argon inert atmosphere for softening and kept at the temperature for 1 hour. Then, the temperature was increased to 1,000 °C under an argon inert atmosphere and kept at the temperature for 1 hour. After that, the temperature was naturally cooled down to room temperature followed by crushing the resultant to obtain a precursor material. Then, 90g of the precursor material was added into 255ml of the coating solution, ball milled, spray dried, and carbonized for 1 hour in an argon inert atmosphere at a temperature of 1,000 °C to obtain the negative electrode material.

### COMPARATIVE EXAMPLE 1

This comparative example provides a negative electrode material with the following preparation method:
95g of the same batch of oil-based needle coke from Example 1 was added into 100ml of carbon tetrachloride organic solvent containing 5% (w/v) phenolic resin. Then, the mixture was ground through a ball mill to mill at a rotation rate of 50rpm/min for 48 hours, then vacuum dried. Then, the temperature was increased to 800 °C under an argon inert atmosphere in a tube furnace for carbonization for 3 hours. After that, the temperature was naturally cooled down to room temperature followed by crushing the resultant to obtain a hard carbon-coated graphite composite material.

### COMPARATIVE EXAMPLE 2

This comparative example provides a negative electrode material and its preparation method. The negative electrode material includes a core and a shell which is coated outside the core, and the core is boron-doped graphite; the doping ratio of boron in the boron-doped graphite is 9.6% (a mass fraction); the shell includes an ordinary titanium oxide, an amorphous carbon, and carbon nanotubes. The mass ratio of the core to the shell is 95:5; the mass ratio of the ordinary titanium oxide to the amorphous carbon is 5:94, and the mass ratio of the ordinary titanium oxide to carbon nanotubes is 5:1.

The method for preparing the negative electrode material includes:
(1) Preparation of the coating solution: 5g of the ordinary titanium oxide (purchased from Guangzhou Hongwu Material Technology Co., Ltd.) was added into 7,520ml of carbon tetrachloride containing 5% (w/v) phenolic resin, then 100ml of NMP dispersion containing 1% (w/v) carbon nanotubes was added, and they were mixed evenly to obtain the coating solution;
(2) Preparation of the negative electrode material: 92g of petroleum-based needle coke material from the same batch as Example 1, 31g of titanium diboride and 5g of asphalt were weighed and mix evenly. The mixture was ground through a ball mill at a rotation rate of 50rpm/min for 48 hours, and then heated to 250 °C under an argon inert atmosphere for softening and kept at the temperature for 3 hours. Then, the temperature was increased to 800 °C under an argon inert atmosphere and kept at the temperature for 3 hours. After that, the temperature was naturally cooled down to room temperature followed by crushing the resultant to obtain a precursor material. Afterwards, 95g of the precursor material was added into 381ml of the coating solution, milled, vacuum dried, and carbonized for 3 hours under an argon inert atmosphere at a temperature of 800 °C to obtain the negative electrode material.

### COMPARATIVE EXAMPLE 3

This comparative example provides a negative electrode material and a preparation method thereof. The negative electrode material includes a core and a shell which is coated outside the core, and the core is boron-doped graphite. The doping ratio of boron in the boron-doped graphite is 9.6% (a mass fraction); and the shell includes a porous iron oxide, an amorphous carbon, and carbon nanotubes. The porosity of the porous iron oxide is 30%, with an average pore size of 100nm. The mass ratio of the core to the shell is 95:5; the mass ratio of the porous iron oxide to amorphous carbon is 5:94, and the mass ratio of the porous iron oxide to carbon nanotubes is 5: 1.

The method for preparing the negative electrode material includes:
(1) Preparation of the porous iron oxide: 139g of FeSO₄·7H₂O was weighed and dissolved into 7,500g of ultrapure water, and stirred to completely dissolve it. The obtained solution was transferred into a stainless steel reaction kettle lined with polytetrafluoroethylene, sealed tightly, and placed in an oven. Reaction was conducted at 160 °C for 12 hours. After the reaction is completed, the resulting reaction product was allowed to naturally cool. Afterwards, the obtained reaction products were alternately cleaned with ultrapure water and anhydrous ethanol until the cleaning solution was neutral. Then, the cleaned reaction product was dried in a vacuum drying oven at 60 °C for 12 hours to obtain a porous iron oxide precursor. Afterwards, the precursor was placed in a nitrogen atmosphere and calcined at 350 °C for 1 hour to obtain the porous iron oxide.
(2) Preparation of the coating solution: 5g of the porous iron oxide was added into 7,520ml of carbon tetrachloride containing 5% (w/v) phenolic resin, then 100ml of NMP dispersion containing 1% (w/v) carbon nanotubes was added, and they were mixed evenly to obtain the coating solution;
(3) Preparation of the negative electrode material: 92g of needle coke material from the same batch as the examples, 31g of titanium diboride and 5g of asphalt were weighed and mix evenly. The mixture was ground through a ball mill at a rotation rate of 50rpm/min for 48 hours, then heated to 250 °C under an argon inert atmosphere for softening and kept at the temperature for 3 hours. Then, the temperature was increased to 800 °C under an argon inert atmosphere and kept at the temperature for 3 hours. After that, the temperature was naturally cooled down to room temperature followed by crushing the resultant to obtain a precursor material. Afterwards, 95g of the precursor material was added into 381ml of the coating solution, ball milled, vacuum dried, and carbonized for 3 hours under an argon inert atmosphere at 800 °C to obtain the negative electrode material.

### COMPARATIVE EXAMPLE 4

This comparative example provides a negative electrode material and a preparation method thereof. The negative electrode material comprises a core and a shell which is coated outside the core, the core is graphite, and the shell includes a porous titanium oxide, an amorphous carbon, and graphene. The porosity of the porous titanium oxide is 5%, with an average pore size of 10nm. The mass ratio of the core to the shell is 99:1; the mass ratio of the porous titanium oxide to the amorphous carbon is 10:89, and the mass ratio of the porous titanium oxide to the graphene is 10:1.

The method for preparing the negative electrode material includes:
(1) Preparation of the porous titanium oxide: same as Example 2;
(2) Preparation of the coating solution: same as Example 2;
(3) Preparation of the negative electrode material: 92.75g of oil-based needle coke and 1g of asphalt were weighed and mix evenly. The mixture was ground through a ball mill at a rotation rate of 10rpm/min for 72 hours, then heated to 200 °C under an argon inert atmosphere for softening and kept at the temperature for 6 hours. Then, the temperature was increased to 700 °C under an argon inert atmosphere and kept at the temperature for 6 hours. After that, the temperature was naturally cooled down to room temperature followed by crushing the resultant to obtain a precursor material. Afterwards, 99g of the precursor material was added into 36.8ml of the coating solution, milled, vacuum dried, and carbonized for 6 hours under an argon inert atmosphere at 600 °C to obtain the negative electrode material.

### EXPERIMENTAL EXAMPLE 1: SEM Testing

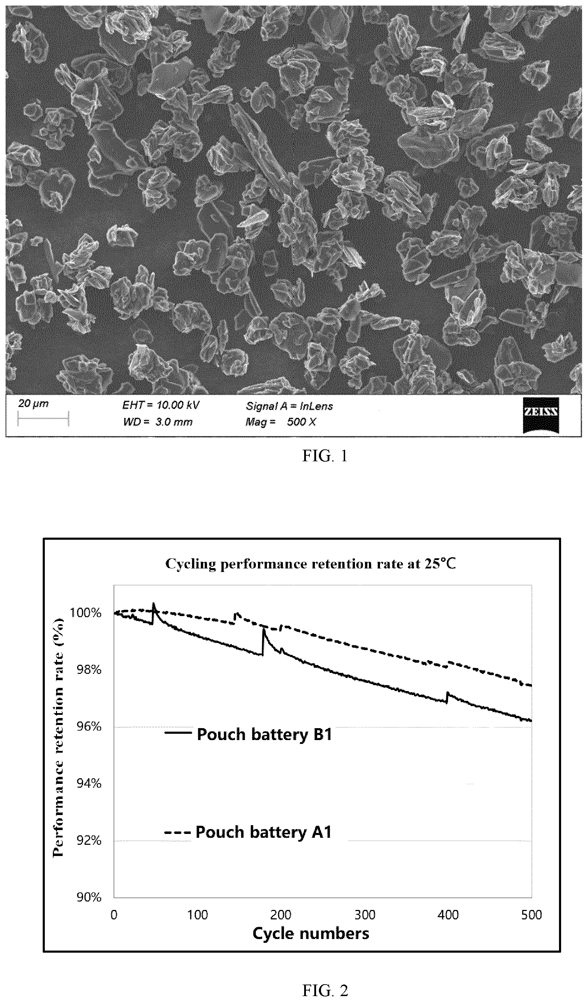

The negative electrode material prepared in Example 1 was used for SEM testing, and the test results are shown in Fig. 1. From Fig. 1, it can be seen that the negative electrode material prepared in Example 1 has a granular structure with uniform size ranging from 10µm to 18 µm.

### EXPERIMENTAL EXAMPLE 2

According to GB/T 24533-2009 "Graphite-based Negative Electrode Materials for Lithium Ion Batteries", the specific surface area and tap density of the negative electrode materials prepared in each example and comparative example were tested. The test results are shown in Table 1.

**Table 1 Specific Surface Area Results of Negative Electrode Materials**

| Item | specific surface area (m²/g) | tap density (g/cm³) |
|---|---|---|
| Example1 | 4.3 | 1.15 |
| Example2 | 4.1 | 1.14 |
| Example3 | 4.6 | 1.13 |
| Comparative Example1 | 1.7 | 1.01 |
| Comparative Example2 | 1.8 | 1.17 |
| Comparative Example3 | 3.8 | 1.02 |
| Comparative Example4 | 3.3 | 0.94 |

From Table 1, it can be seen that the specific surface area of the negative electrode material prepared in each example of the present application is significantly higher than that of Comparative Examples 1-4. The reason for this is that the surface of the composite material is coated with the porous titanium oxide material or the core is made of boron-doped material, which can improve the specific surface area of the material, and the negative electrode material obtained has an appropriate tap density.

### EXPERIMENTAL EXAMPLE 3: Button Battery Testing

The negative electrode materials prepared in each example and comparative example was assembled into button batteries a1, a2, a3, b1, b2, b3 and b4, respectively. The assembly method is as follows: an adhesive, a conductive agent, and a solvent were added into the negative electrode material, and stirred to make slurry, then the slurry was coated on the copper foil, dried, and rolled to obtain the negative electrode plate. The single surface density of the electrode plate coating is 6mg/cm²; the adhesive used is LA132 adhesive, the conductive agent is SP, and the solvent is secondary distilled water. The ratio of each component is, negative electrode material: SP: LA132: secondary distilled water = 95g: 1g: 4g: 220mL; the electrolyte is LiPF₆/EC+DEC (the concentration of hexafluorophosphate LiPF₆ is 1.2mol/L, and the volume ratio of ethylene carbonate EC to diethyl carbonate DEC is 1:1), a metal lithium plate is used as the counter electrode and celegard2400 is used as a separator. The assembly of the button battery was carried out in a glove box filled with argon gas, and the electrochemical performance test was conducted on the CT2001A battery tester of Wuhan Land Electronics Co., Ltd. The charging/discharging voltage is in a range from 0.005V to 2.0V, and the first discharge capacity and the first efficiency were tested at a charging and discharging rate of 0.1C. The discharge capacity at 3C and 0.2C rates was also tested, and the rate (3C/0.2C) was obtained. The test results are shown in Table 2.

**Table 2. Performance Comparison of Button Batteries Prepared with Negative Electrode Materials of Examples and Comparative Examples**

| Item | First discharge capacity under 0.1C (mAh/g) | First efficiency (%) | Rate (3C/0.2C) |
|---|---|---|---|
| Button battery a1 | 364.3 | 96.6 | 93.50% |
| Button battery a2 | 364.4 | 96.4 | 92.60% |
| Button battery a3 | 363.5 | 96.2 | 91.30% |
| Button battery b1 | 355.4 | 93.2 | 83.90% |
| Button battery b2 | 353.9 | 95.1 | 84.20% |
| Button battery b3 | 357.9 | 94.3 | 90.20% |
| Button battery b4 | 356.6 | 94.5 | 91.80% |

From Table 2, it can be seen that the first discharge capacity, first charge/discharge efficiency, and rate performance of the lithium battery prepared using the composite materials of Examples 1-4 of the present application are significantly higher than that of the comparative examples. The reason for this is that coating the surface of boron-doped graphite core with porous titanium oxide, amorphous carbon, and conductive agent can better utilize the structural stability of porous titanium oxide, improve the intercalation/deintercalation of lithium ions, reduce the irreversible capacity loss of the material, and improve the first efficiency. It can also better utilize the high conductivity of titanium oxide lithium ions to improve the rate performance of button batteries.

### EXPERIMENTAL EXAMPLE 4: Pouch Battery Testing

The negative electrode materials prepared in each example and comparative example were used to prepare the negative electrode plates separately, and the method and process conditions are the same as those in Experimental Example 3. A ternary material (LiNi_{1/3}Co_{1/3}Mn_{1/3}O₂) was used as positive electrode material, LiPF₆ solution (solvent EC+DEC, volume ratio 1:1, LiPF₆ concentration 1.3mol/L) was used as electrolyte solution, and celegard2400 was used as separator, and 5Ah pouch batteries A1, A2, A3, B1, B2, B3, and B4 were prepared, respectively. Afterwards, the cycling performance and rate performance of the pouch batteries were tested.

Test conditions for cycling performance: charging and discharging current of 1C/1C, voltage range of 2.8-4.2V, and 500 cycles.

Test conditions for rate performance: charging rate of 1C/3C/5C/8C, discharging rate of 1C, and voltage range of 2.8-4.2V.

The test results are shown in Tables 3 and 4.

**Table 3. Comparison of Cycling Performance of Pouch Batteries Prepared with Negative Electrode Materials of Examples and Comparative Examples.**

| Item | Initial capacity retention rate | retention rate (%) at 100 cycles | retention rate (%) at 200 cycles | retention rate (%) at 500 cycles |
|---|---|---|---|---|
| Pouch battery A1 | 100 | 99.1 | 98.4 | 97.4 |
| Pouch battery A2 | 100 | 98.8 | 98.3 | 97.2 |
| Pouch battery A3 | 100 | 98.4 | 98.1 | 97.1 |
| Pouch battery B1 | 100 | 96.5 | 97.1 | 96.3 |
| Pouch battery B2 | 100 | 97.2 | 96.9 | 95.3 |
| Pouch battery B3 | 100 | 98.5 | 96.8 | 95.3 |
| Pouch battery B4 | 100 | 98.7 | 97.9 | 95.9 |

From Table 3, it can be seen that the cycling performance of the pouch batteries prepared using the composite materials of Examples 1-3 is better than that of the comparative examples, especially at 500 cycles. The reason for this is that in terms of 1C/1C rate cycling performance, the deposition of porous titanium oxide, amorphous carbon, and conductive agent on the surface of boron-doped graphite core can significantly improve the lithium ion transfer rate; at the same time, the structure stability of the porous titanium oxide is utilized to improve cycling performance.

**Table 4. Comparison of Rate Charging Performance of Pouch Batteries Prepared with Composite materials of Examples and Comparative Examples**

| Item | Constant current charging ratio (%) | | | |
|---|---|---|---|---|
| | 1C | 3C | 5C | 8C |
| Pouch battery A1 | 100 | 95.3 | 91.1 | 80.5 |
| Pouch battery A2 | 100 | 94.8 | 90.9 | 79.1 |
| Pouch battery A3 | 100 | 94.4 | 90.6 | 78.9 |
| Pouch battery B1 | 100 | 91.5 | 84.9 | 67.9 |
| Pouch battery B2 | 100 | 93.7 | 87.6 | 71.4 |
| Pouch battery B3 | 100 | 94.1 | 89.8 | 73.3 |
| Pouch battery B4 | 100 | 94.1 | 89.9 | 74.1 |

From Table 4, it can be seen that the pouch batteries prepared using the negative electrode materials of Examples 1-3 has better constant current charging ratio. The reason for this is that coating the surface of boron-doped graphite core with porous titanium oxide, amorphous carbon, and conductive agent can better improve the lithium ion intercalation/deintercalation rate of the material during rate charging, thereby improving rate charging performance.

Obviously, the above examples are only for the purpose of clarifying the examples provided, rather than limiting the implementation modes. For ordinary technical personnel in their respective fields, different forms of changes or modifications can be made based on the above explanations. There is no need and cannot be an exhaustive list of all implementation modes here. The obvious changes or modifications arising from this are still within the scope of protection of the present application.

## Claims

1. A negative electrode material, comprising:
a core comprising a boron-doped graphite; and
a shell which is coated outside the core, the shell comprising a porous titanium oxide, an amorphous carbon, and a conductive agent.

2. The negative electrode material of claim 1, wherein the porous titanium oxide has a porosity ranging from 5% to 50% and an average pore size ranging from 10nm to 500nm.

3. The negative electrode material of claim 1 or 2, wherein a mass ratio of the core to the shell is (90-99):(1-10); and/or, a mass ratio of the porous titanium oxide to the amorphous carbon is (1: 10):(88-98.5); and/or, a mass ratio of the porous titanium oxide to the conductive agent is (1-10):(0.5-2); and/or, a doping ratio of boron in the boron-doped graphite is in a range from 1wt% to 20wt%; and/or, the conductive agent is selected from at least one of carbon nanotubes, graphene and super carbon black.

4. A method for preparing a negative electrode material, comprising the following steps:
(1) mixing a porous titanium oxide, an amorphous carbon raw material, a conductive agent and an organic solvent to prepare a coating solution; and mixing and heating a graphite raw material, a boron-containing compound and a binder to obtain a precursor material; and
(2) mixing the precursor material with the coating solution, drying, carbonizing to prepare the negative electrode material.

5. The method for preparing a negative electrode material of claim 4, wherein the method for preparing a negative electrode material satisfies at least one of the following 1) to 8):
1) the amorphous carbon raw material is a resin, and optionally, the resin is selected from at least one of phenolic resin, furfural resin, and epoxy resin;
2) the organic solvent is selected from at least one of carbon tetrachloride, N-methylpyrrolidone, cyclohexane, tetrahydrofuran, and xylene; and/or, the conductive agent is selected from at least one of carbon nanotube, graphene, and super carbon black; and/or, the boron-containing compound is selected from at least one of boron oxide, titanium diboride, magnesium diboride, chromium diboride and boron carbide;
3) the graphite raw material is a needle coke, and optionally, the needle coke is selected from at least one of petroleum-based needle coke and coal-based needle coke;
4) the binder is asphalt;
5) grinding, stirring and/or ultrasonic treatment are conducted after the mixing of step (1) and/or the mixing of step (2);
6) in step (1), the heating process involves heating to a temperature ranging from 200 °C to 300 °C under an inert gas and holding for 1 hour to 6 hours within this temperature range, then heating to a temperature ranging from 700°C to 1000 °C under an inert gas and holding for 1 hour to 6 hours within this temperature range;
7) in step (2), the carbonizing is carried out at a temperature ranging from 600 °C to 1000 °C for a time period ranging from 1 hour to 6 hours; and
8) a mass ratio of the porous titanium oxide to the resin is (10-50):(50-400); and/or, a mass ratio of the porous titanium oxide to the conductive agent is (1-10):(0.5-2); and/or, a mass ratio of the graphite raw material to the boron-containing compound is 100:(1-10).

6. The method for preparing a negative electrode material of claim 4 or claim 5, wherein in step (1), the porous titanium oxide is added into a resin-containing organic solvent, mixed with a conductive agent-containing organic solvent, to obtain a coating solution;
optionally, a mass-volume percentage of the resin in the resin-containing organic solvent is in a range from 1% to 15%;
optionally, a ratio of a mass of the porous titanium oxide to a volume of the resin-containing organic solvent is (1-10)g: (2000-7600)mL;
optionally, a mass-volume percentage of the conductive agent in the conductive agent-containing organic solvent is in a range from 0.5% to 2%; and
optionally, a ratio of a mass of the porous titanium oxide to a volume of the conductive agent-containing organic solvent is (1-10)g: (100-500)mL.

7. The method for preparing a negative electrode material of any one of claims 4 to 6, wherein a process for preparing the porous titanium oxide comprises the following steps:
heating an aqueous solution of titanate salt, adding an acid solution to adjust the pH value, carrying out a reaction, performing solid-liquid separation to keep solid, drying and carbonizing to prepare the porous titanium oxide.

8. The method for preparing a negative electrode material of claim 7, wherein the titanate salt is selected from at least one of calcium titanate, magnesium titanate, lithium titanate, aluminum titanate and potassium titanate; and/or, the aqueous solution of titanate salt is heated at a temperature ranging from 60 °C to 100 °C for at least 1 hour; and/or, the reaction is carried out for at least 1 hour; and/or, carbonizing is performed at a temperature ranging from 600 °C to 1000 °C for a time period of 1 hour to 6 hours; and/or, the pH value is adjusted to 4 to 6; and/or, the acid solution is a hydrochloric acid solution, a sulfuric acid solution, a citric acid solution, an acetic acid solution, or a phosphoric acid solution.

9. A negative electrode plate, comprising the negative electrode material of any one of claims 1 to 3 or the negative electrode material prepared by the method for preparing a negative electrode material of any one of claims 4-8.

10. A battery, comprising the negative electrode plate of claim 9, and also a battery shell, a positive electrode plate, a separator and an electrolyte solution.
